# EUROPEAN PATENT APPLICATION

(11) **EP 4 738 293 A1**
(43) Date of publication of application: **06.05.2026**
(21) Application number: 24832218.2
(22) Date of filing: 30.04.2024
(51) Int. Cl.: G06V 40/13, G06F 21/32

(54) **ELECTRONIC DEVICE INCLUDING FINGERPRINT SENSOR**

(30) Priority: 30.06.2023 KR 20230085382; 24.07.2023 KR 20230096265
(71) Applicant: Samsung Electronics Co., Ltd., Suwon-si, Gyeonggi-do 16677 (KR)
(72) Inventor: HEO, Jihun, Suwon-si, Gyeonggi-do 16677 (KR); PARK, Jihoon, Suwon-si, Gyeonggi-do 16677 (KR); KIM, Hyunwoo, Suwon-si, Gyeonggi-do 16677 (KR); HWANG, Seungho, Suwon-si, Gyeonggi-do 16677 (KR)
(74) Representative: Gulde & Partner
(86) International application number: PCT/KR2024/005882
(87) International publication number: WO 2025/005433

(57) **Abstract**

This electronic device may comprise: a housing forming the external appearance; a first member in the housing; a fingerprint sensor in the housing, the fingerprint sensor including a first surface supported by the first member and a second surface opposite to the first surface; a second member detachably fastened to the first member and including a third surface formed as a part of the housing and a fourth surface opposite to the third surface and facing the second surface; and an elastic member disposed between the second member and the fingerprint sensor so as to provide an elastic force to the second member, and coming into direct contact with the fourth surface. The fingerprint sensor may receive ultrasonic waves, reflected by an external object touched on the third surface, through the elastic member and the second member.

## Description

### [Technical Field]

The following descriptions relate to an electronic device including a fingerprint sensor.

### [Background Art]

A fingerprint sensor is being widely used in biometric technology for user authentication or personal identification in various electronic devices. Such a fingerprint sensor may include, for example, an ultrasonic fingerprint sensor. The ultrasonic fingerprint sensor may operate by measuring a cycle in which ultrasonic waves emitted to a user's body returns. The ultrasonic fingerprint sensor is mounted within a housing of an electronic device, and may detect fingerprint information by receiving ultrasonic waves reflected by the user's finger in contact with the housing.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may comprise a housing, a first member within the housing, a fingerprint sensor within the housing, a second member, and an elastic member. The housing may form an exterior of the electronic device. The fingerprint sensor may include a first surface supported by the first member and a second surface opposite the first surface. The second member may be detachably fastened to the first member. The second member may include a third surface formed as a part of the housing and a fourth surface opposite to the third surface and facing the second surface. The elastic member may be disposed between the second member and the fingerprint sensor to provide an elastic force to the second member. The elastic member may be directly contacted on the fourth surface. The fingerprint sensor may be configured to receive ultrasonic waves reflected by an external object contacted on the third surface through the elastic member and the second member.

### [Description of the Drawings]

FIG. 1 is a diagram indicating a fastening structure of an exemplary fingerprint sensor according to an embodiment.
FIG. 2 is a diagram indicating a fastening structure of an exemplary fingerprint sensor according to an embodiment.
FIG. 3 is a diagram indicating an exemplary fingerprint sensor and a flexible printed circuit board according to an embodiment.
FIG. 4 is a diagram indicating a fastening structure of an exemplary fingerprint sensor according to an embodiment.
FIG. 5 is a diagram indicating an exemplary fingerprint sensor on a first member according to an embodiment.
FIG. 6 is a diagram indicating an exemplary fingerprint sensor on a first member according to an embodiment.
FIG. 7 is a diagram indicating an exemplary elastic member according to an embodiment.
FIG. 8 is a diagram indicating an exemplary elastic member according to an embodiment.
FIG. 9A is a diagram indicating an exemplary elastic member according to an embodiment.
FIG. 9B is a diagram indicating an exemplary elastic member according to an embodiment.
FIG. 9C is a diagram indicating an exemplary elastic member according to an embodiment.
FIG. 10 is a diagram indicating an electronic device according to an embodiment.
FIG. 11 is a diagram indicating an exemplary fingerprint sensor within a housing according to an embodiment.
FIG. 12 is a diagram indicating an exemplary fingerprint sensor within a housing according to an embodiment.
FIG. 13 is a diagram indicating an exemplary fingerprint sensor in a housing according to an embodiment.
FIG. 14 is a diagram indicating a fingerprint sensor coupled to a display assembly according to an embodiment.
FIG. 15 is a block diagram of an electronic device in a network environment according to various embodiments.

### [Mode for Invention]

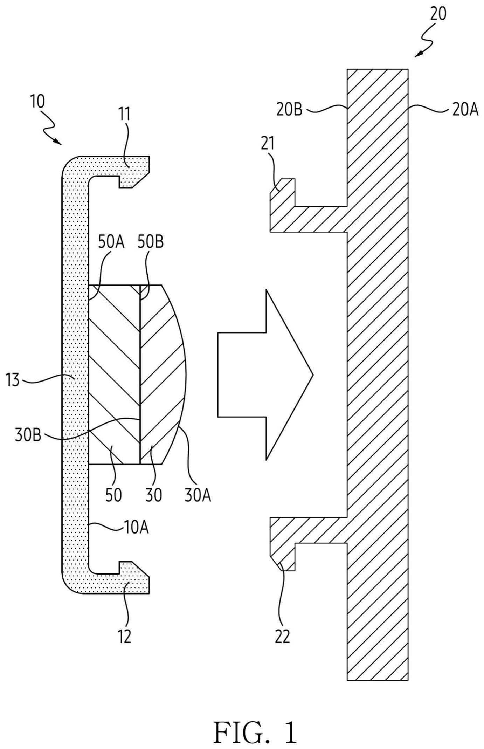

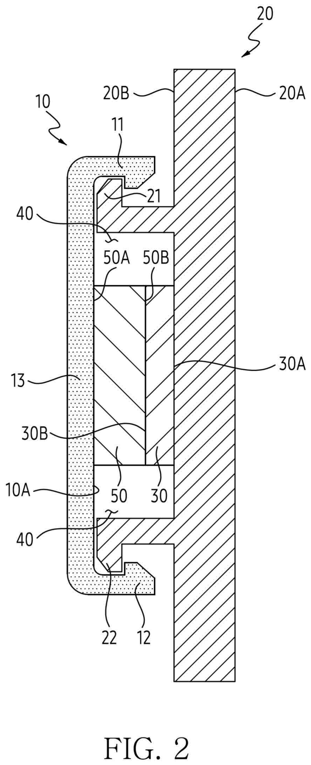

FIGS. 1 and 2 are diagrams indicating a fastening structure of an exemplary fingerprint sensor according to an embodiment. FIG. 1 indicates a state before a first member 10 and a second member 20 are fastened, and FIG. 2 indicates a state after the first member 10 and the second member 20 are fastened.

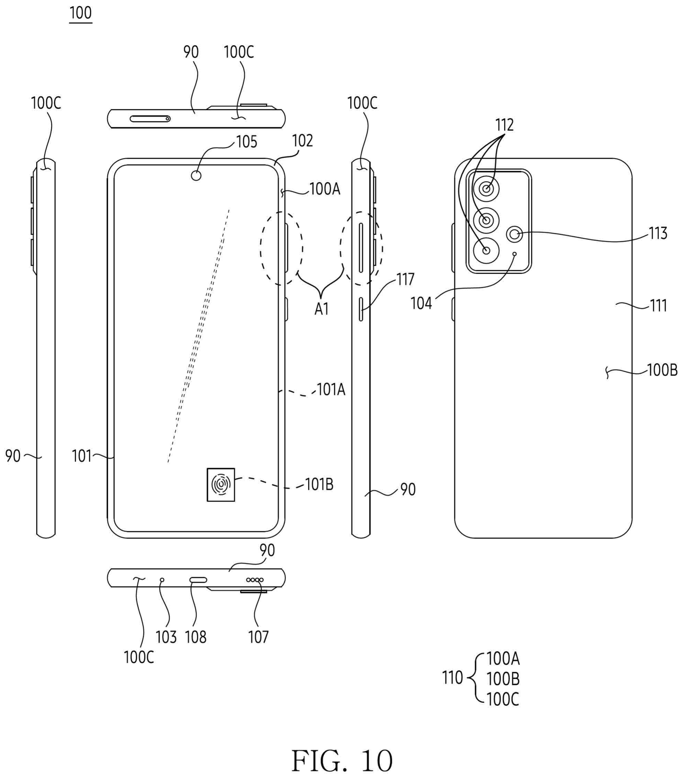

Referring to FIGS. 1 and 2, an electronic device (e.g., an electronic device 100 of FIG. 10) according to an embodiment may include the first member 10, the second member 20, a fingerprint sensor 50, and an elastic member 30.

In an embodiment, the first member 10 may include a support portion 13, a first fastening part 11, and a second fastening part 12. The support portion 13 may have a substantially plate shape, but is not limited thereto. The support portion 13 may support the fingerprint sensor 50. For example, a support surface 10A of the support portion 13 may support the fingerprint sensor 50. The support surface 10A may face the second member 20. The first fastening part 11 and the second fastening part 12 may be formed at both ends of the support portion 13. For example, the first fastening part 11 and the second fastening part 12 may extend from both ends of the support portion 13 toward the second member 20. The fingerprint sensor 50 may be located between the first fastening part 11 and the second fastening part 12. The first fastening part 11 and the second fastening part 12 may be detachably coupled to the second member 20. In an embodiment, the first member 10 may be formed of metal and/or plastic, but is not limited thereto. For example, the first member 10 may be formed of a material having rigidity that allows mechanical assembly. For example, the first member 10 may be formed of rubber or silicone, but is not limited thereto.

In an embodiment, the second member 20 may include a first surface 20A, a second surface 20B, a first fastening part 21, and a second fastening part 22. The first surface 20A of the second member 20 may partially form an exterior (e.g., a first surface 100A or a third surface 100C of FIG. 10) of the electronic device. The second surface 20B of the second member 20 may be opposite to the first surface 20A. The second surface 20B may face a second surface 50B of the fingerprint sensor 50. The first surface 20A and the second surface 20B of the second member 20 may be referred to as a third surface and a fourth surface, respectively.

In an embodiment, the first fastening part 21 and the second fastening part 22 may be formed on the second surface 20B of the second member 20. The first fastening part 21 and the second fastening part 22 may be detachably coupled to the first member 10. In an embodiment, an empty space 40 around the fingerprint sensor 50 may be formed between the first member 10 and the second member 20.

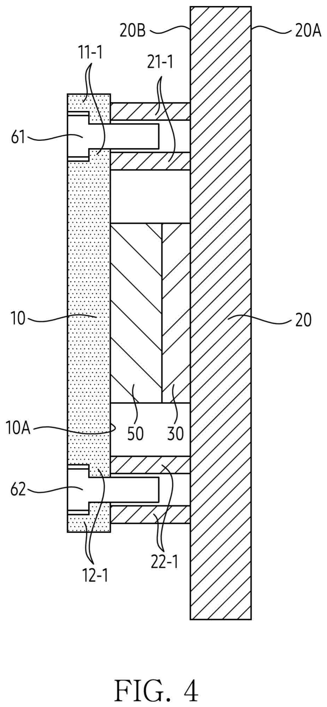

In an embodiment, the second member 20 may be detachably coupled to the first member 10. For example, the first member 10 and the second member 20 may be coupled through the first fastening parts 11 and 21 and the second fastening parts 12 and 22 that are detachably coupled to each other. The first fastening parts 11 and 21 and the second fastening parts 12 and 22 may include, for example, hooks that are snap-fit fastened. However, it is not limited thereto, and the first fastening parts 11 and 21 and the second fastening parts 12 and 22 may include various fastening structures detachably coupled to each other. For example, the first fastening parts 11 and 21 and the second fastening parts 12 and 22 may be configured such that screw fastening is possible, such as first fastening parts 11-1 and 21-1 and second fastening parts 12-1 and 22-1 of FIG. 4.

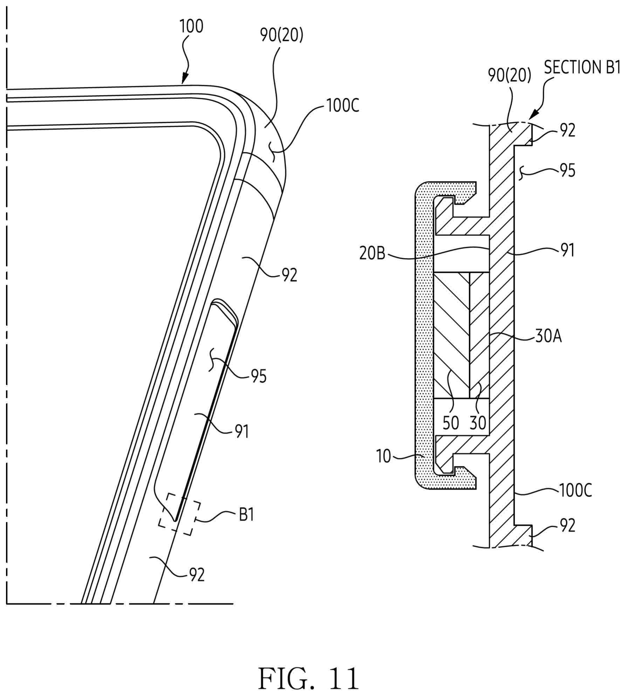

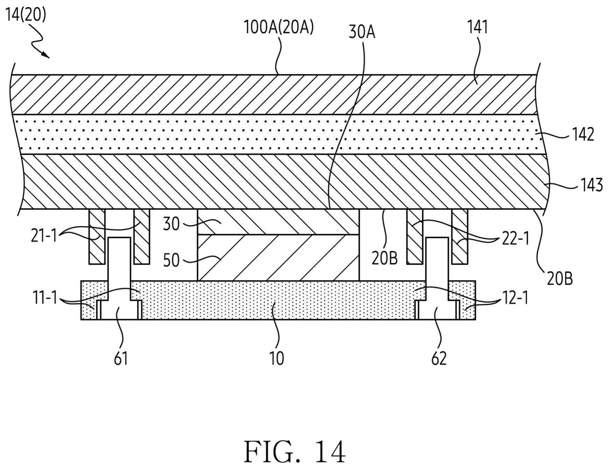

In an embodiment, the second member 20 may be formed of metal and/or plastic, but is not limited thereto. For example, the second member 20 may be configured to have rigidity that allows mechanical assembly and to allow ultrasonic waves to pass through. For example, the second member 20 may be configured as a part of a housing (e.g., a housing 110 of FIG. 10) of the electronic device. For example, the second member 20 may be a frame 90 of FIG. 11 or a display assembly 14 of FIG. 14.

In an embodiment, the fingerprint sensor 50 may be disposed on the first member 10. For example, the fingerprint sensor 50 may be disposed on the support surface 10A of the support portion 13. In an embodiment, the fingerprint sensor 50 may be supported by the first member 10. For example, the fingerprint sensor 50 may be supported by the support surface 10A of the first member 10.

In an embodiment, the fingerprint sensor 50 may include a first surface 50A and a second surface 50B. The first surface 50A may be supported by the first member 10. The second surface 50B may be opposite to the first surface 50A. The second surface 50B may face the elastic member 30 and the second member 20.

In an embodiment, the elastic member 30 may include an upper surface 30A facing the second member 20, and a lower surface 30B opposite the upper surface 30A and facing the fingerprint sensor 50 and the first member 10. The elastic member 30 may be disposed on the fingerprint sensor 50. For example, the elastic member 30 may be disposed on the second surface 50B of the fingerprint sensor 50. The lower surface 30B of the elastic member 30 may be supported by the fingerprint sensor 50.

In an embodiment, the elastic member 30 may be in direct contact with the second member 20. For example, the upper surface 30A of the elastic member 30 may be in direct contact with the second surface 20B of the second member 20. The elastic member 30 may be in tight contact with the second member 20.

In an embodiment, the elastic member 30 may be disposed between the second member 20 and the fingerprint sensor 50 to provide an elastic force to the second member 20. For example, the elastic member 30 interposed between the second member 20 and the fingerprint sensor 50 may be compressed as the first member 10 is coupled to the second member 20. As the elastic member 30 is compressed, the elastic member 30 may provide the elastic force to the second member 20. In an embodiment, the elastic member 30 may have a first volume before the first member 10 and the second member 20 are fastened, and may have a second volume smaller than the first volume after the first member 10 and the second member 20 are fastened.

In an embodiment, the elastic force provided by the elastic member 30 to the second member 20 may improve contact quality of an interface (e.g., the upper surface 30A) between the elastic member 30 and the second member 20, thereby improving a performance of the fingerprint sensor 50 that transmits and receives ultrasonic waves through the interface. In addition, the elastic force provided by the elastic member 30 may prevent fastening between the first member 10 and the second member 20 from being loosened, and may prevent a movement of the fingerprint sensor 50 seated on the first member 10.

In an embodiment, the elastic member 30 may be configured to pass ultrasonic waves. For example, the elastic member 30 may be formed of a solid to which ultrasonic waves are transmitted. For example, the elastic member 30 may include natural rubber or a synthetic rubber including a resin (e.g., urethane). For another example, the elastic member 30 may be formed by curing a silicon elastic coating agent. However, it is not limited by the above-described example.

In an embodiment, the fingerprint sensor 50 may be configured to transmit or generate ultrasonic waves. In addition, the fingerprint sensor 50 may be configured to receive or detect ultrasonic waves. For example, the fingerprint sensor 50 may include a piezoelectric element for generating and detecting ultrasonic waves, but is not limited thereto.

In an embodiment, the fingerprint sensor 50 may transmit ultrasonic waves to an external object (e.g., a user's finger) contacting on or adjacent to the first surface 20A of the second member 20. The ultrasonic waves transmitted from the fingerprint sensor 50 may reach the external object by passing through the elastic member 30 and the second member 20. The fingerprint sensor 50 may receive the ultrasonic waves reflected from the external object through the second member 20 and the elastic member 30. The electronic device according to an embodiment may obtain fingerprint information (e.g., a fingerprint image) based on the ultrasonic waves transmitted and received from the fingerprint sensor 50.

In a comparative embodiment, the fingerprint sensor 50 may be attached to a counterpart to which the user's finger is contacted through an adhesive. For example, the fingerprint sensor 50 of the comparative embodiment may be temporarily attached to the counterpart using a photocurable adhesive (e.g., an ultraviolet (UV) adhesive) after being attached to the counterpart to which a thermosetting resin (e.g., epoxy) is applied. Thereafter, the fingerprint sensor 50 may be fully attached to the counterpart by performing a bubble removal and an autoclave process. However, these processes have a problem in that rework is difficult after curing and the processes include multiple steps, resulting in an increase in process costs. In addition, since the fingerprint sensor 50 attached through the adhesive is difficult to remove from the counterpart, it may increase repair and replacement costs of the fingerprint sensor 50.

On the other hand, the fingerprint sensor 50 according to an embodiment may be assembled through a detachable mechanical fastening structure (e.g., the first fastening parts 11 and 21 and the second fastening parts 12 and 22). Accordingly, a process of assembling the fingerprint sensor 50 to the second member 20 may be simplified, and material costs required for the assembly process may be reduced. In addition, since the fingerprint sensor 50 may be easily removed from the second member 20, convenience of repair and replacement of the fingerprint sensor 50 may increase and costs therefrom may be reduced.

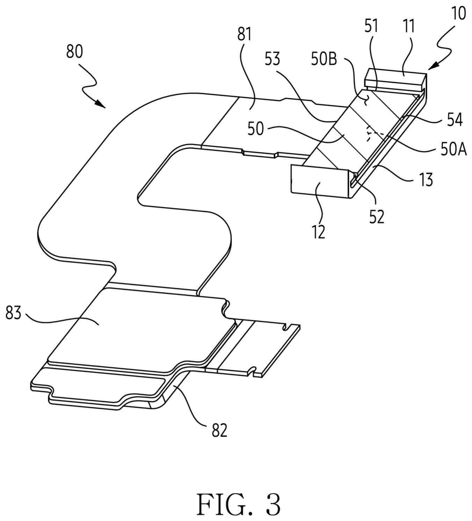

FIG. 3 is a diagram indicating an exemplary fingerprint sensor and a flexible printed circuit board according to an embodiment. Hereinafter, a redundant description for a configuration having the same reference numerals may be omitted. In FIG. 3, for convenience of description, illustrations of an elastic member 30 and a second member 20 are omitted.

Referring to FIG. 3, a first surface 50A of a fingerprint sensor 50 according to an embodiment may include a periphery defining an area of the first surface 50A. The periphery of the first surface 50A may include a first part 51, a second part 52, a third part 53, and a fourth part 54. The first part 51 may be adjacent to a first fastening part 11. The second part 52 facing the first part 51 may be adjacent to a second fastening part 12. For example, the first part 51 may be located between the first fastening part 11 and the second part 52, and the second part 52 may be located between the second fastening part 12 and the first part 51. The third part 53 may extend from an end of the first part 51 to an end of the second part 52. The fourth part 54 facing the third part 53 may extend from another end of the first part 51 to another end of the second part 52. A shape of the periphery of the first surface 50A may be rectangle, but is not limited thereto.

The electronic device according to an embodiment may include a flexible printed circuit board 80 connected to the fingerprint sensor 50. The flexible printed circuit board 80 may include a portion 81 extending toward the third part 53 of the fingerprint sensor 50 or from the third part 53. The portion 81 of the flexible printed circuit board 80 may be connected to the third part 53 of the fingerprint sensor 50, but is not limited thereto. For example, the portion 81 of the flexible printed circuit board 80 may be also connected to the first surface 50A by extending below the first surface 50A of the fingerprint sensor 50.

In an embodiment, a shielding member 82 (e.g., a shield can) may be disposed on the flexible printed circuit board 80. Electronic circuits may be mounted inside the shielding member 82. On an opposite side of the shielding member 82, a plate 83 supporting the flexible printed circuit board 80 to mount the electronic circuits may be disposed. A shape of the flexible printed circuit board 80 is not limited by the illustrated example, and various design modifications may be possible.

FIG. 4 is a diagram indicating a fastening structure of an exemplary fingerprint sensor according to an embodiment. Referring to FIG. 4, a first member 10 may include a first fastening part 11-1 and a second fastening part 12-1. The second member 20 may include a first fastening part 21-1 and a second fastening part 22-1 that protrude from a second surface 20B. First fastening holes communicating with each other may be formed in the first fastening parts 11-1 and 21-1, respectively. The first fastening parts 11-1 and 21-1 may be coupled through a first screw 61 that penetrates the first fastening holes and is fastened to the first fastening holes. Second fastening holes communicating with each other may be formed in the second fastening parts 12-1 and 22-1, respectively. The second fastening parts 12-1 and 22-1 may be coupled through a second screw 62 that penetrates the second fastening holes and is fastened to the second fastening holes.

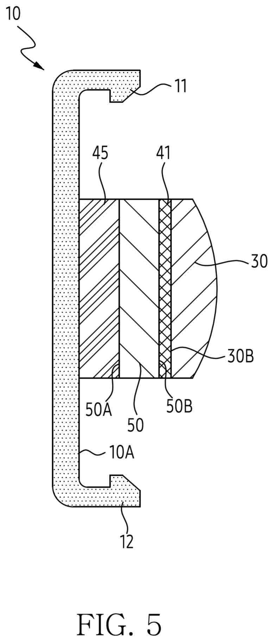

FIG. 5 is a diagram indicating an exemplary fingerprint sensor on a first member according to an embodiment. Referring to FIG. 5, the electronic device according to an embodiment may further include a first adhesive layer 41 and a second adhesive layer 45.

In an embodiment, the first adhesive layer 41 may be disposed between a fingerprint sensor 50 and an elastic member 30. For example, the first adhesive layer 41 may be disposed between a second surface 50B of the fingerprint sensor 50 and a lower surface 30B of the elastic member 30. The first adhesive layer 41 may attach the elastic member 30 to the fingerprint sensor 50. The first adhesive layer 41 may include, for example, a resin adhesive (e.g., epoxy) or a double-sided tape, but is not limited thereto.

In an embodiment, the second adhesive layer 45 may be disposed between a first member 10 and the fingerprint sensor 50. For example, the second adhesive layer 45 may be disposed between a support surface 10A of the first member 10 and a first surface 50A of the fingerprint sensor 50. The second adhesive layer 45 may attach the fingerprint sensor 50 to the first member 10. The second adhesive layer 45 may include, for example, a resin adhesive (e.g., epoxy) or a double-sided tape, but is not limited thereto.

Alternatively, a first fastening part 11 and a second fastening part 12 of the first member 10 may be replaced with the first fastening part 11-1 and the second fastening part 12-1 of FIG. 4.

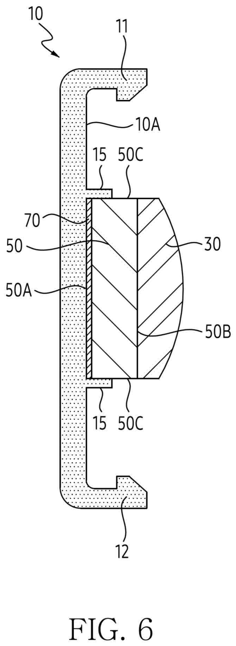

FIG. 6 is a diagram indicating an exemplary fingerprint sensor on a first member according to an embodiment. Referring to FIG. 6, a fingerprint sensor 50 according to an embodiment may include a third surface 50C extending from a periphery of a first surface 50A to a periphery of a second surface 50B. The third surface 50C may be referred to as a side surface of the fingerprint sensor 50.

In an embodiment, a first member 10 may include a protrusion 15. The protrusion 15 may be formed on a support surface 10A. The protrusion 15 may at least partially surround the third surface 50C of the fingerprint sensor 50. For example, when viewed in a direction perpendicular to the support surface 10A, the protrusion 15 may at least partially surround a circumference of the third surface 50C of the fingerprint sensor 50. In an embodiment, the protrusion 15 may extend from the support surface 10A along the third surface 50C toward the periphery of the second surface 50B.

In an embodiment, the protrusion 15 may prevent a movement of the fingerprint sensor 50 by surrounding the fingerprint sensor 50. In addition, the protrusion 15 may reduce process deviation by guiding a location where the fingerprint sensor 50 is seated on the first member 10.

The electronic device according to an embodiment may further include a cushioning member 70 disposed between the fingerprint sensor 50 and the first member 10. The cushioning member 70 may include, for example, a sponge, but is not limited thereto. The cushioning member 70 may alleviate a physical impact that may be applied to the fingerprint sensor 50. Alternatively, the cushioning member 70 may be replaced with the second adhesive layer 45 of FIG. 5. Alternatively, a first fastening part 11 and a second fastening part 12 of the first member 10 may be replaced with the first fastening part 11-1 and the second fastening part 12-1 of FIG. 4. Additionally, an adhesive member (e.g., the first adhesive layer 41 of FIG. 5) may be further disposed between the fingerprint sensor 50 and an elastic member 30.

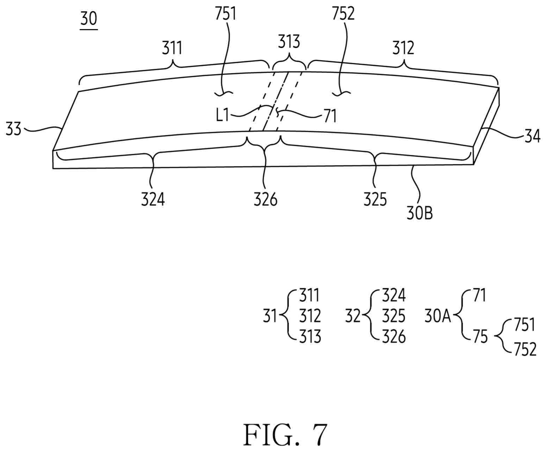

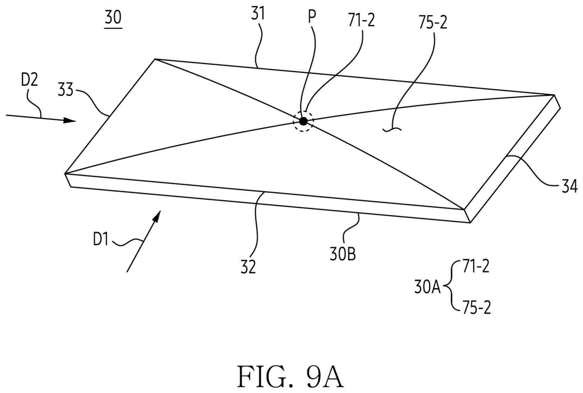

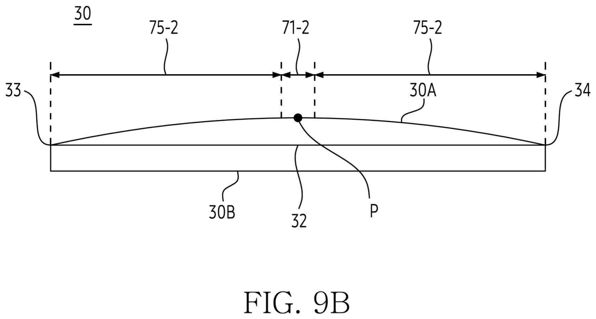

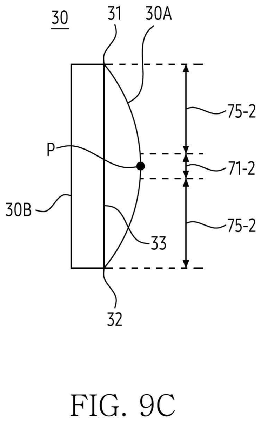

FIGS. 7, 8, 9A, 9B, and 9C are diagrams indicating an exemplary elastic member 30 according to an embodiment. FIGS. 7, 8, 9A, 9B, and 9C illustrate the elastic member 30 before a first member 10 and a second member 20 are fastened. FIG. 9B is a diagram of the elastic member 30 of FIG. 9A viewed in a first direction D1. FIG. 9C is a diagram of the elastic member 30 of FIG. 9A viewed in a second direction D2.

Referring to FIGS. 7, 8, 9A, 9B, and 9C together with FIGS. 1 and 2, in an embodiment, the elastic member 30 may be configured such that a contact area with the second member 20 is increased according to the fastening of the first member 10 and the second member 20. For example, an upper surface 30A of the elastic member 30 may be formed to be convex toward the second member 20. For example, the upper surface 30A may be formed as a convex curved surface having a line segment (e.g., a line segment L1 or a line segment L2) or a point (e.g., point (P)) as a vertex or a peak. The line or the point of the upper surface 30A that forms the vertex or the peak may be located at a geometric center of the upper surface 30A, but is not limited thereto.

In an embodiment, in a process in which the first member 10 and the second member 20 are fastened, an area in which the elastic member 30 is first in contact with the second member 20 may be a first area. Thereafter, in a state in which the first member 10 and the second member 20 are completely fastened, the elastic member 30 may be in contact with the second member 20 by a second area larger than the first area.

In an embodiment, in the process in which the first member 10 and the second member 20 are fastened, a shape in which the elastic member 30 first contacts the second member 20 may be point contact or line contact. Thereafter, in a state in which the first member 10 and the second member 20 are completely fastened, a shape in which the elastic member 30 contacts the second member 20 may be surface contact. Accordingly, air bubbles between the elastic member 30 and the second member 20 may be eliminated, and a surface contact characteristic between the upper surface 30A of the elastic member 30 and a second surface 20B of the second member 20 may be improved.

Referring to FIG. 7, a periphery of the upper surface 30A of the elastic member 30 may include a first part 31, a second part 32, a third part 33, and a fourth part 34. The first part 31 may be spaced apart from the second part 32 and parallel to the second part 32. The third part 33 may connect an end of the first part 31 and an end of the second part 32. The fourth part 34 may be spaced apart from the third part 33 and parallel to the third part 33. The fourth part 34 may connect another end of the first part 31 to another end of the second part 32. The first part 31 and the second part 32 may be longer than the third part 33 and the fourth part 34, but are not limited thereto.

In an embodiment, the first part 31 may include a first section 311, a second section 312 spaced apart from the first section 311, and a third section 313 connecting the first section 311 and the second section 312. The second part 32 may include a fourth section 324, a fifth section 325 spaced apart from the fourth section 324, and a sixth section 326 connecting the fourth section 324 and the fifth section 325. The fourth section 324 of the second part 32 may face the first section 311 of the first part 31. The fifth section 325 of the second part 32 may face the second section 312 of the first part 31. The sixth section 326 of the second part 32 may face the third section 313 of the first part 31.

In an embodiment, the upper surface 30A of the elastic member 30 may include a central region 71 and a peripheral region 75 partially surrounding the central region 71. The peripheral region 75 may extend from the central region 71 to a portion of the periphery of the upper surface 30A. For example, the peripheral region 75 may include a first region 751 and a second region 752. The first region 751 may extend from the first section 311 of the first part 31 along the third part 33 to the fourth section 324 of the second part 32. The second region 752 may extend from the second section 312 of the first part 31 along the fourth part 34 to the fifth section 325 of the second part 32. The first region 751 and the second region 752 may be spaced apart from each other, and the central region 71 may be formed between the first region 751 and the second region 752. The central region 71 may extend from the third section 313 of the first part 31 to the sixth section 326 of the second part 32 in a direction parallel to the third part 33 or the fourth part 34.

In an embodiment, a first distance between the central region 71 and a lower surface 30B may be greater than a second distance between the peripheral region 75 and the lower surface 30B. The first distance and the second distance may be based on a direction perpendicular to the lower surface 30B.

In an embodiment, the second distance may be the largest at a periphery between the central region 71 and the peripheral region 75 and may be the smallest at the third part 33 and the fourth part 34. The second distance may gradually increase as it goes from the third part 33 toward the center region 71, and may gradually increase as it goes from the fourth part 34 toward the center region 71.

In an embodiment, the central region 71 may include the line segment L1 extending from the third section 313 of the first part 31 to the sixth section 326 of the second part 32. The line segment L1 may be spaced apart from the peripheral region 75. The line segment L1 may be parallel to the third part 33 and the fourth part 34.

In an embodiment, the first distance may be the largest at the line segment L1 and the smallest at the periphery between the central region 71 and the peripheral region 75. The first distance and the second distance may gradually increase as it goes from the third part 33 toward the line segment L1. In addition, the first distance and the second distance may gradually increase as it goes from the fourth part 34 toward the line segment L1. A distance between the upper surface 30A and the lower surface 30B may be the greatest at the line segment L1 of the central region 71.

In an embodiment, the line segment L1 may pass through a center of the first part 31 and a center of the second part 32, but is not limited thereto. A distance between the line segment L1 and the third part 33 and a distance between the line segment L1 and the fourth part 34 may be the same each other, but are not limited thereto.

In an embodiment, a cross section that cut the upper surface 30A into a plane parallel to the first part 31 and perpendicular to the lower surface 30B may include a curve line, but is not limited by the illustrated example.

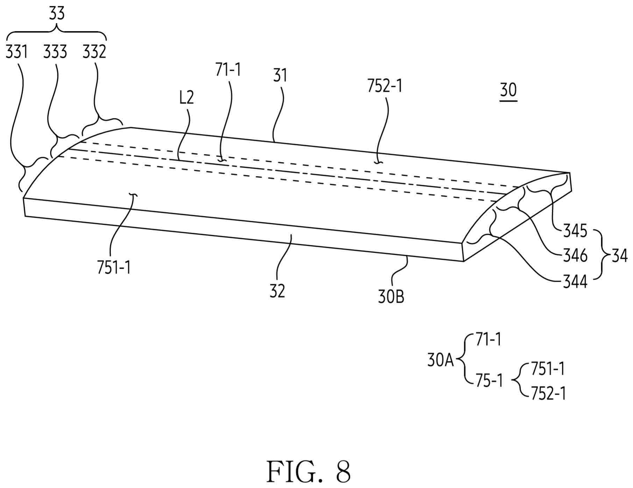

Referring to FIG. 8, in an embodiment, the third part 33 may include a first section 331, a second section 332 spaced apart from the first section 331, and a third section 333 connecting the first section 331 and the second section 332. The fourth part 34 may include a fourth section 344, a fifth section 345 spaced apart from the fourth section 344, and a sixth section 346 connecting the fourth section 344 and the fifth section 345. The fourth section 344 of the fourth part 34 may face the first section 331 of the third part 33. The fifth section 345 of the fourth part 34 may face the second section 332 of the third part 33. The sixth section 346 of the fourth part 34 may face the third section 333 of the third part 33.

In an embodiment, the upper surface 30A of the elastic member 30 may include a central region 71-1 and a peripheral region 75-1 partially surrounding the central region 71-1. The peripheral region 75-1 may extend from the central region 71-1 to a portion of the periphery of the upper surface 30A. For example, the peripheral region 75-1 may include a first region 751-1 and a second region 752-1. The first region 751-1 may extend from the first section 331 of the third part 33 along the first part 31 to the fourth section 344 of the fourth part 34. The second region 752-1 may extend from the second section 332 of the third part 33 along the second part 32 to the fifth section 345 of the fourth part 34. The first region 751-1 and the second region 752-1 may be spaced apart from each other, and the central region 71-1 may be formed between the first region 751-1 and the second region 752-1. The central region 71-1 may extend from the third section 333 of the third part 33 to the sixth section 346 of the fourth part 34 in a direction parallel to the first part 31 or the second part 32.

In an embodiment, a third distance between the central region 71-1 and the lower surface 30B may be greater than a fourth distance between the peripheral region 75-1 and the lower surface 30B. The third distance and the fourth distance may be based on the direction perpendicular to the lower surface 30B.

In an embodiment, the fourth distance may be the largest at a periphery between the central region 71-1 and the peripheral region 75-1, and may be the smallest at the first part 31 and the second part 32. The fourth distance may gradually increase as it goes from the first part 31 toward the central region 71-1, and may gradually increase as it goes from the second part 32 toward the central region 71-1.

In an embodiment, the central region 71-1 may include the line segment L2 extending from the third section 333 of the third part 33 to the sixth section 346 of the fourth part 34. The line segment L2 may be spaced apart from the peripheral region 75-1. The line segment L2 may be parallel to the first part 31 and the second part 32.

In an embodiment, the third distance may be the largest at the line segment L2 and the smallest at the periphery between the central region 71 and the peripheral region 75. The third distance and the fourth distance may gradually increase as it goes from the first part 31 toward the line segment L2. In addition, the third distance and the fourth distance may gradually increase as it goes from the second part 32 toward the line segment L2. A distance between the upper surface 30A and the lower surface 30B may be the greatest at the line segment L2 of the central region 71-1.

In an embodiment, the line segment L2 may pass through a center of the third part 33 and a center of the fourth part 34, but is not limited thereto. A distance between the line segment L2 and the first part 31 and a distance between the line segment L2 and the second part 32 may be the same each other, but are not limited thereto.

In an embodiment, a cross section that cut the upper surface 30A into a plane parallel to the third part 33 and perpendicular to the lower surface 30B may include a curve line, but is not limited by the illustrated example.

Referring to FIGS. 9A, 9B, and 9C, the upper surface 30A of the elastic member 30 according to an embodiment may include a central region 71-2 and a peripheral region 75-2 entirely enclosing the central region 71-2. The peripheral region 75-2 may extend from the central region 71-2 to an entire periphery of the upper surface 30A. For example, the peripheral region 75-2 may extend from the central region 71-2 to the first part 31, the second part 32, the third part 33, and the fourth part 34 of the upper surface 30A.

In an embodiment, a fifth distance between the central region 71-2 and the lower surface 30B may be greater than a sixth distance between the peripheral region 75-2 and the lower surface 30B. The fifth distance and the sixth distance may be based on the direction perpendicular to the lower surface 30B.

In an embodiment, the sixth distance may be the largest at a periphery between the central region 71-2 and the peripheral region 75-2 and may be the smallest at the periphery of the upper surface 30A. In an embodiment, the sixth distance may gradually increase as it goes from the periphery of the upper surface 30A toward the central region 71-2.

In an embodiment, the central region 71-2 may include a point P. The point P may be located within the central region 71-2 to be spaced apart from the peripheral region 75-2. In an embodiment, the fifth distance may be the largest at the point P and may be the smallest at the periphery between the central region 71-2 and the peripheral region 75-2. The fifth distance and the sixth distance may gradually increase as it goes from the periphery of the upper surface 30A toward the point P. A distance between the upper surface 30A and the lower surface 30B may be the greatest at the point P of the central region 71-2. The point P may be a center point of the upper surface 30A, but is not limited thereto.

In an embodiment, a first cross section that cut the upper surface 30A into a plane parallel to the first part 31 and perpendicular to the lower surface 30B may include a curve line, but is not limited by the illustrated example. In an embodiment, a second cross section that cut the upper surface 30A into a plane parallel to the third part 33 and perpendicular to the lower surface 30B may include a curve line, but is not limited by the illustrated example.

FIG. 10 is a diagram indicating an electronic device according to an embodiment. Referring to FIG. 10, an electronic device 100 according to an embodiment may include a housing 110 forming an exterior of the electronic device 100. For example, the housing 110 may include a first surface (or a front surface) 100A, a second surface (or a rear surface) 100B, and a third surface (or a side surface) 100C surrounding a space between the first surface 100A and the second surface 100B. In an embodiment, a first member (e.g., the first member 10 of FIG. 1), a fingerprint sensor (e.g., the fingerprint sensor 50 of FIG. 1), and an elastic member (e.g., the elastic member 30 of FIG. 1) may be located within the housing 110. In an embodiment, the housing 110 may refer to a structure forming at least a part of the first surface 100A, the second surface 100B, and/or the third surface 100C. For example, the housing 110 may include a front plate 102, a frame 90, and a rear plate 111. The front plate 102 may be referred to as a first cover, and the rear plate 111 may be referred to as a second cover.

The electronic device 100 according to an embodiment may include the substantially transparent front plate 102. In an embodiment, the front plate 102 may form at least a part of the first surface 100A. In an embodiment, the front plate 102 may include, for example, a glass plate or a polymer plate that includes various coating layers, but is not limited thereto.

The electronic device 100 according to an embodiment may include the substantially opaque rear plate 111. In an embodiment, the rear plate 111 may form at least a part of the second surface 100B. In an embodiment, the rear plate 111 may be formed of coated or colored glass, ceramic, polymer, metal (e.g., aluminum, stainless steel (STS), or magnesium), or a combination of at least two of the materials.

The electronic device 100 according to an embodiment may include the frame (or a lateral member) 90. In an embodiment, the frame 90 may form at least a part of the third surface 100C of the electronic device 100 by being coupled to the front plate 102 and/or the rear plate 111. For example, the frame 90 may form the entire third surface 100C of the electronic device 100, and for another example, the frame 90 may form the third surface 100C of the electronic device 100 together with the front plate 102 and/or the rear plate 111.

Unlike the illustrated embodiment, in a case that the third surface 100C of the electronic device 100 is partially formed by the front plate 102 and/or the rear plate 111, the front plate 102 and/or the rear plate 111 may include a region that is bent toward the rear plate 111 and/or the front plate 102 at its periphery and seamlessly extends. The extending region of the front plate 102 and/or the rear plate 111 may be located at both ends of a long edge of the electronic device 100, but is not limited by the above-described examples.

In an embodiment, the frame 90 may include metal and/or polymer. In an embodiment, the rear plate 111 and the frame 90 may be integrally formed, and may include the same material (e.g., a metal material such as aluminum), but are not limited thereto. For example, the rear plate 111 and frame 90 may be formed in separate configurations and/or may include different materials.

In an embodiment, the electronic device 100 may include at least one of a display 101, audio modules 103, 104 and 107, a sensor module (not illustrated), camera modules 105, 112, and 113, a key input device 117, a light emitting element (not illustrated), and/or a connector hole 108.

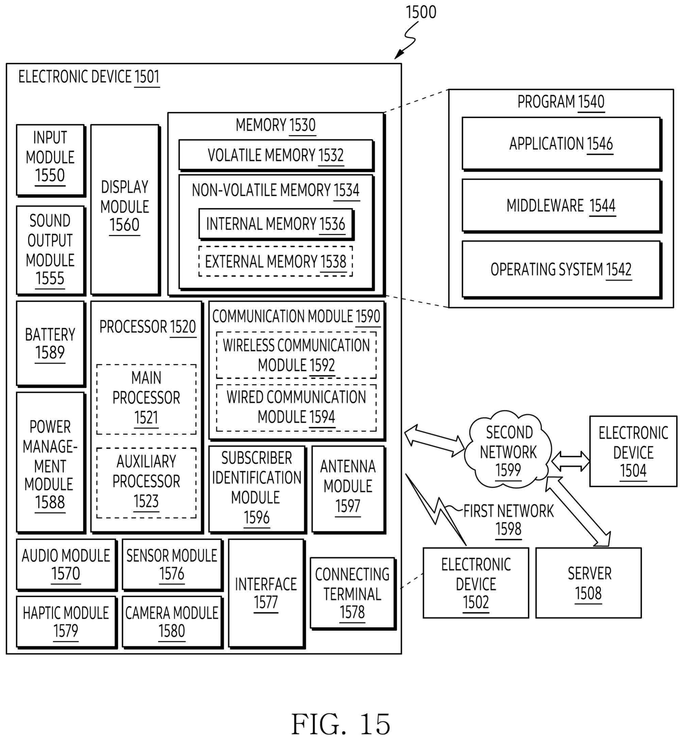

In an embodiment, the display 101 (e.g., a display module 1560 of FIG. 15) may be visually exposed through a significant part of the front plate 102. For example, at least a part of the display 101 may be visible through the front plate 102 forming the first surface 100A. In an embodiment, the display 101 may be disposed on a back surface of the front plate 102.

In an embodiment, a shape of an outer periphery of the display 101 may be formed substantially the same as a shape of an outer periphery of the front plate 102 adjacent to the display 101. In an embodiment, in order to expand an area in which the display 101 is visually exposed, a distance between the outer periphery of the display 101 and the outer periphery of the front plate 102 may be formed substantially the same.

In an embodiment, the display 101 (or the first surface 100A of the electronic device 100) may include a screen display region 101A. In an embodiment, the display 101 may provide visual information to a user through the screen display region 101A. In the illustrated embodiment, when the first surface 100A is viewed from the front, the screen display region 101A is illustrated as being spaced apart from an outer periphery of the first surface 100A and located inside the first surface 100A, but is not limited thereto. In an embodiment, when the first surface 100A is viewed from the front, at least a part of a periphery of the screen display region 101A may substantially coincide with a periphery of the first surface 100A (or the front plate 102).

In an embodiment, the screen display region 101A may include a sensing region 101B configured to obtain biometric information of the user. Herein, the meaning of "the screen display region 101A includes the sensing region 101B" may be understood as at least a part of the sensing region 101B being overlapped with the screen display region 101A. For example, the sensing region 101B may refer to a region capable of displaying visual information by the display 101 and additionally obtaining biometric information (e.g., fingerprint) of the user like other regions of the screen display region 101A. In an embodiment, the sensing region 101B may be formed in the key input device 117.

In an embodiment, the display 101 may include a region in which the first camera module 105 (e.g., a camera module 1580 of FIG. 15) is located. In an embodiment, an opening is formed in the region of the display 101, and the first camera module 105 (e.g., a punch hole camera) may be at least partially disposed in the opening to face the first surface 100A. In this case, the screen display region 101A may surround at least a part of a periphery of the opening. In an embodiment, the first camera module 105 (e.g., an under display camera (UDC)) may be disposed under the display 101 to overlap the region of the display 101. In this case, the display 101 may provide visual information to the user through the region, and additionally, the first camera module 105 may obtain an image corresponding to a direction facing the first surface 100A through the region of the display 101.

In an embodiment, the display 101 may be coupled or disposed adjacent to touch sensing circuitry, a pressure sensor capable of measuring an intensity (a pressure) of a touch, and/or a digitizer that detects a magnetic field type stylus pen.

In an embodiment, the audio modules 103, 104, and 107 (e.g., an audio module 1570 of FIG. 15) may include microphone holes 103 and 104 and a speaker hole 107.

In an embodiment, the microphone holes 103 and 104 may include the first microphone hole 103 formed in a partial region of the third surface 100C and the second microphone hole 104 formed in a partial region of the second surface 100B. A microphone (not illustrated) for obtaining external sound may be disposed inside the microphone holes 103 and 104. The microphone may include a plurality of microphones to sense a direction of sound.

In an embodiment, the second microphone hole 104 formed in the partial region of the second surface 100B may be disposed adjacent to the camera modules 105, 112, and 113. For example, the second microphone hole 104 may obtain sound according to an operation of the camera modules 105, 112, and 113. However, it is not limited thereto.

In an embodiment, the speaker hole 107 may include an external speaker hole 107 and a receiver hole for calling (not illustrated). The external speaker hole 107 may be formed on a part of the third surface 100C of the electronic device 100. In an embodiment, the external speaker hole 107 may be implemented as one hole with the microphone hole 103. Although not illustrated, the receiver hole for calling (not illustrated) may be formed on another part of the third surface 100C. For example, the receiver hole for calling may be formed on an opposite side of the external speaker hole 107 on the third surface 100C. For example, based on the illustration of FIG. 10, the external speaker hole 107 may be formed on the third surface 100C corresponding to a lower end part of the electronic device 100, and the receiver hole for calling may be formed on the third surface 100C corresponding to an upper end part of the electronic device 100. However, it is not limited thereto, and in an embodiment, the receiver hole for calling may be formed at a position other than the third surface 100C. For example, the receiver hole for calling may be formed by a space separated between the front plate 102 (or the display 101) and the frame 90.

In an embodiment, the electronic device 100 may include at least one speaker (not illustrated) configured to output sound to an outside of the housing 110 through the external speaker hole 107 and/or the receiver hole for calling (not illustrated).

In an embodiment, the sensor module (not illustrated) (e.g., a sensor module 1576 of FIG. 15) may generate an electrical signal or a data value corresponding to an operating state of an inside of the electronic device 100 or an environmental state of an outside. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

In an embodiment, the camera modules 105, 112, and 113 (e.g., the camera module 1580 of FIG. 15) may include the first camera module 105 disposed to face the first surface 100A of the electronic device 100, the second camera module 112 disposed to face the second surface 100B, and the flash 113.

In an embodiment, the second camera module 112 may include a plurality of cameras (e.g., dual cameras, triple cameras, or quad cameras). However, the second camera module 112 is not necessarily limited to including the plurality of cameras, and may include one camera.

In an embodiment, the first camera module 105 and the second camera module 112 may include one or more lenses, an image sensor, and/or an image signal processor.

In an embodiment, the flash 113 may include, for example, a light emitting diode or a xenon lamp. In an embodiment, two or more lenses (an infrared camera, a wide-angle and telephoto lens) and image sensors may be disposed on a surface of the electronic device 100.

In an embodiment, the key input device 117 (e.g., an input module 1550 of FIG. 15) may be disposed on the third surface 100C of the electronic device 100. In an embodiment, the electronic device 100 may not include some or all of the key input devices 117, and the key input device 117 that is not included may be implemented in another form, such as a soft key, on the display 101.

In an embodiment, the connector hole 108 may be formed on the third surface 100C of the electronic device 100 such that a connector of an external device may be accommodated. A connection terminal (e.g., a connection terminal 1578 of FIG. 15) electrically connected to the connector of the external device may be disposed within the connector hole 108. The electronic device 100 according to an embodiment may include an interface module (e.g., an interface 1577 of FIG. 15) for processing an electrical signal transmitted and received through the connection terminal.

In an embodiment, the electronic device 100 may include a light emitting element (not illustrated). For example, the light emitting element (not illustrated) may be disposed on the first surface 100A of the housing 110. The light emitting element (not illustrated) may provide state information of the electronic device 100 in an optical form. In an embodiment, the light emitting element (not illustrated) may provide a light source linked to an operation of the first camera module 105. For example, the light emitting element (not illustrated) may include LED, IR LED, and/or a xenon lamp.

Although FIG. 10 illustrates the bar-type electronic device 100, a shape of the electronic device 100 is not limited by the illustrated example. The electronic device 100 according to an embodiment may be various types of electronic devices. For example, the electronic device 100 may be a foldable or rollable type portable communication device (e.g., a smartphone). The electronic device 100 may include, for example, a computer device, a portable multimedia device, a portable medical device, a camera, a wearable device, or a home appliance.

FIGS. 11, 12, and 13 are diagrams indicating an exemplary fingerprint sensor within a housing according to an embodiment. FIGS. 11, 12, and 13 indicate the region A1 of FIG. 10. Referring to FIGS. 11, 12, and 13, an electronic device 100 according to an embodiment may include a frame 90. The frame 90 may configure a housing (e.g., the housing 110 of FIG. 10). For example, the frame 90 may be formed as a part of the housing. In an embodiment, the frame 90 may be a second member 20.

In an embodiment, the frame 90 may include a portion 91 in direct contact with an upper surface 30A of an elastic member 30. The portion 91 of the frame 90 may overlap a fingerprint sensor 50. The fingerprint sensor 50 may transmit and receive ultrasonic waves through the elastic member 30 and the portion 91 of the frame 90. The fingerprint sensor 50 may transmit ultrasonic waves to a user's finger in contact with a third surface 100C of the frame 90 (or a first surface 20A of the second member 20), and receive the ultrasonic waves reflected by the user's finger.

In an embodiment, the frame 90 may include a peripheral portion 92 at least partially surrounding the portion 91. The portion 91 and the peripheral portion 92 of the frame 90 may form a recess, a protrusion, or one continuous surface.

For example, referring to FIG. 11, the frame 90 may include a recess 95 formed as the portion 91 is dented from the peripheral portion 92. The recess 95 may be formed on a third surface 100C of the portion 91. The recess 95 may provide tactile information indicating a location of a fingerprint sensing region to the user.

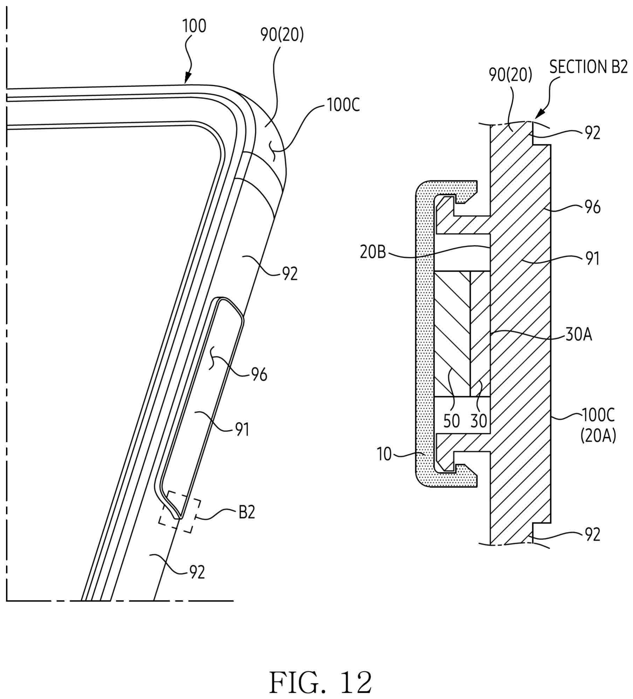

For example, referring to FIG. 12, the frame 90 may include a protrusion 96 formed as the portion 91 protrudes from the peripheral portion 92. The protrusion 96 may be formed on the third surface 100C of the portion 91. The protrusion 96 may provide tactile information indicating a location of a fingerprint sensing region to the user.

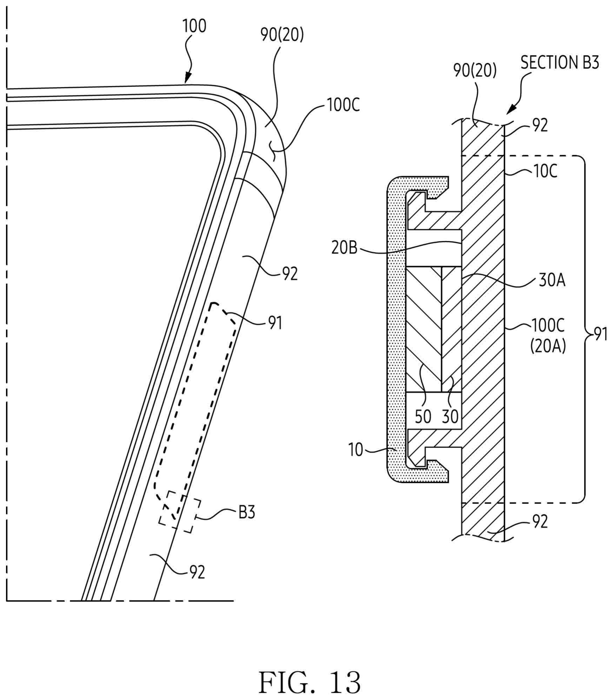

For example, referring to FIG. 13, the peripheral portion 92 of the frame 90 may be connected to the portion 91 without a step. For example, a third surface 100C of the peripheral portion 92 and the third surface 100C of the portion 91 may be extended without a step. The third surface 100C of the peripheral portion 92 and the third surface 100C of the portion 91 may form one continuous surface. As described, a button-free design in which a region for fingerprint sensing is smoothly formed may improve design competitiveness of the electronic device 100.

FIG. 14 is a diagram indicating a fingerprint sensor coupled to a display assembly according to an embodiment. Referring to FIG. 14, an electronic device according to an embodiment may include a display assembly 14. The display assembly 14 may configure a part of the housing. For example, the display assembly 14 may be formed as a part of the housing. In an embodiment, the display assembly 14 may be a second member 20.

In an embodiment, the display assembly 14 may include a first cover 141 (e.g., the front plate 102 of FIG. 10) forming a front surface 100A of the electronic device (or a first surface 20A of the second member 20), a display panel 142 (e.g., the display 101 of FIG. 10), and a metal layer 143 forming a second surface 50B. The display panel 142 may be disposed between the first cover 141 and the metal layer 143. The metal layer 143 may be attached under the display panel 142 and may support the display panel 142. In an embodiment, the display panel 142 may include a flat panel display, a curved display, a flexible display, or a rollable display.

In an embodiment, a first fastening part 21-1 and a second fastening part 22-1 may be formed on a second surface 20B of the metal layer 143. A first member 10 may be coupled to the metal layer 143 of the display assembly 14 through fastening parts 11-1 and 21-1 and second fastening parts 12-1 and 22-1. Alternatively, the first fastening parts 11-1 and 21-1 and the second fastening parts 12-1 and 22-1 may be replaced with the first fastening parts 11 and 21 and the second fastening parts 12 and 22 of FIG. 2.

In an embodiment, an upper surface 30A of an elastic member 30 may be in contact with the second surface 20B of the metal layer 143. A fingerprint sensor 50 may transmit and receive ultrasonic waves through the elastic member 30 and the display assembly 14. The fingerprint sensor 50 may transmit ultrasonic waves to a user's finger in contact with a front surface 100A of the first cover 141 (or the first surface 20A of the second member 20), and receive the ultrasonic waves reflected by the user's finger.

Although not illustrated, the fingerprint sensor 50 may be fastened to a key button (e.g., the key input device 117 of FIG. 10). For example, the first member 10 may be detachably fastened to a fastening structure formed on the key button. The elastic member 30 may be disposed between the fingerprint sensor 50 and the key button. The upper surface 30A of the elastic member 30 may be in direct contact with the key button. The fingerprint sensor 50 may transmit and receive ultrasonic waves through the elastic member 30 and the key button. The fingerprint sensor 50 may receive the ultrasonic waves reflected by the user's finger in contact with the key button. In addition, a dome switch for generating a pressing signal of the key button may be disposed under the first member 10. In a case that the user presses the key button, as the dome switch is pressed by the first member 10, an electrical signal may be generated.

According to an embodiment, an electronic device (e.g., the electronic device 100 of FIG. 10) may comprise a housing (e.g., the housing 110 of FIG. 10), a first member (e.g., the first member 10 of FIG. 2) within the housing, a fingerprint sensor (e.g., the fingerprint sensor 50 of FIG. 2) within the housing, a second member (e.g., the second member 20 of FIG. 2), and an elastic member (e.g., the elastic member 30 of FIG. 2). The housing may form an exterior of the electronic device. The fingerprint sensor may include a first surface (e.g., the first surface 50A of FIG. 2) supported by the first member and a second surface (e.g., the second surface 50B of FIG. 2) opposite the first surface. The second member may be detachably fastened to the first member. The second member may include a third surface (e.g., the first surface 20A of FIG. 2) formed as a part of the housing and a fourth surface (e.g., the second surface 20B of FIG. 2) opposite to the third surface and facing the second surface. The elastic member may be disposed between the second member and the fingerprint sensor to provide an elastic force to the second member. The elastic member may be directly contacted on the fourth surface. The fingerprint sensor may be configured to receive ultrasonic waves reflected by an external object contacted on the third surface through the elastic member and the second member.

In an embodiment, the elastic member may include an upper surface (e.g., the upper surface 30A of FIG. 2) directly contacting the fourth surface of the second member and a lower surface (e.g., the lower surface 30B of FIG. 2) opposite to the upper surface and facing the fingerprint sensor. The upper surface may include a central region (e.g., the central region 71 of FIG. 7, the central region 71-1 of FIG. 8, or the central region 71-2 of FIG. 9A) and a peripheral region (e.g., the peripheral region 75-1 of FIG. 8, or the peripheral region 75-2 of FIG. 9A) extending from the central region to a periphery of the upper surface to surround the central region. The elastic member may be compressed as the second member is fastened to the first member. Before the first member and the second member are fastened, a first distance between the central region of the upper surface and the lower surface may be greater than a second distance between the peripheral region of the upper surface and the lower surface. The first distance and the second distance may be based on a direction perpendicular to the lower surface. The second distance may gradually increase as the peripheral region approaches the central region.

In an embodiment, the periphery of the upper surface may include a first part (e.g., the first part 31 of FIG. 7), a second part (e.g., the second part 32 of FIG. 7), a third part (e.g., the third part 33 of FIG. 7) connecting an end of the first part and an end of the second part, and a fourth part (e.g., the fourth part 34 of FIG. 7) connecting another end of the first part and another end of the second part. The first part may include a first section (e.g., the first section 311 of FIG. 7), a second section (e.g., the second section 312 of FIG. 7) spaced apart from the first section, and a third section (e.g., the third section 313 of FIG. 7) connecting the first section and the second section. The second part may include a fourth section (e.g., the fourth section 324 of FIG. 7) facing the first section, a fifth section (e.g., the fifth section 325 of FIG. 7) spaced apart from the fourth section and facing the second section, and a sixth section (e.g., the sixth section 326 of FIG. 7) facing the third section and connecting the fourth section and the fifth section. The peripheral region may include a first region (e.g., the first region 751 of FIG. 7) extending from the first section of the first part to the fourth section of the second part, and a second region (e.g., the second region 752 of FIG. 7) extending from the second section of the first part to the fifth section of the second part. The central region may extend from the third section of the first part to the sixth section of the second part.

In an embodiment, the central region may include a line segment (e.g., the line segment L1 of FIG. 7) extending from the third section of the first part to the sixth section of the second part and spaced apart from the peripheral region. Before the first member and the second member are fastened, the first distance may gradually increase as the peripheral region approaches the line segment.

In an embodiment, a shape of the periphery of the upper surface may be a rectangle in which the first part is longer than the third part, or a rectangle in which the third part is longer than the first part.

In an embodiment, the peripheral region may entirely enclose the central region.

In an embodiment, the central region may include a point (e.g., the point P of FIG. 9A) spaced apart from the peripheral region. Before the first member and the second member are fastened, the second distance may gradually increase as the peripheral region approaches the point.

In an embodiment, at least one of a first cross section and a second cross section of the upper surface may include a curved line, the first cross section cut into a plane perpendicular to the lower surface, the second cross section cut into another plane perpendicular to the surface and the lower surface.

In an embodiment, it may comprise an adhesive member (e.g., the first adhesive layer 41 of FIG. 5) disposed between the second surface of the fingerprint sensor and the elastic member.

In an embodiment, it may comprise an adhesive member (e.g., the second adhesive layer 45 of FIG. 5) disposed between the first member and the first surface of the fingerprint sensor.

In an embodiment, the housing may include a first cover (e.g., the front plate 102 of FIG. 10), a second cover (e.g., the rear plate 111 of FIG. 10), and a frame (e.g., the frame 90 of FIG. 10) disposed between the first cover and the second cover to partially form the exterior (e.g., the third surface 100C of FIG. 10) of the electronic device. The second member may be the frame. The frame may include a portion (e.g., the portion 91 of FIG. 11) in direct contact with the elastic member. The fingerprint sensor may be configured to receive ultrasonic waves through the elastic member and the portion of the frame.

In an embodiment, a protrusion (e.g., the protrusion 96 of FIG. 12) or a recess (e.g., the recess 95 of FIG. 11) may be formed on the third surface of the portion of the frame.

In an embodiment, the frame may include a peripheral portion (e.g., the peripheral portion 92 of FIG. 13) at least partially surrounding the portion. The portion and the peripheral portion of the frame may be connected without a step.

In an embodiment, it may comprise a display assembly (e.g., the display assembly 14 of FIG. 14) including a first cover (e.g., the first cover 141 of FIG. 14) forming the third surface, a display panel (e.g., the display panel 142 of FIG. 14) disposed under the first cover, and a metal layer (e.g., the metal layer 143 of FIG. 14) supporting the display panel and forming the fourth surface. The second member may be the display assembly.

In an embodiment, the fingerprint sensor may include a side surface (e.g., the third surface 50C of FIG. 6) extending from a periphery of the first surface to a periphery of the second surface. The first member may include a support surface (e.g., the support surface 10A of FIG. 6) and a protrusion (e.g., the protrusion 15 of FIG. 6), the support surface supporting the fingerprint sensor. The protrusion of the first member may extend from the support surface along the side surface toward the periphery of the second surface. When viewed in a direction perpendicular to the support surface, the protruding portion of the first member may at least partially surround the side surface of the fingerprint sensor.

In an embodiment, the first member may include a first fastening part (e.g., the first fastening part 11 of FIG. 2) and a second fastening part (e.g., the second fastening part 12 of FIG. 2) that are fastened to the second member. The fingerprint sensor may be located between the first fastening part and the second fastening part.

In an embodiment, a periphery of the first surface of the fingerprint sensor may include a first part (e.g., the first part 51 of FIG. 3) adjacent to the first fastening part, a second part (e.g., the second part 52 of FIG. 3) adjacent to the second fastening part, and a third part (e.g., the third part 53 of FIG. 3) extending from an end of the first part of the fingerprint sensor to an end of the second part of the fingerprint sensor. The electronic device may comprise a flexible printed circuit board (e.g., the flexible printed circuit board 80 of FIG. 3) connected to the fingerprint sensor. The flexible printed circuit board includes a portion (e.g., the portion 81 of FIG. 3) extending from the third part of the first surface.

In an embodiment, the first member and the second member may be assembled through a mechanical fastening structure. The mechanical fastening structure may be configured to compress the elastic member by assembling the first member and the second member.

In an embodiment, the first member and the second member may be configured to be snap-fit fastened, or screw fastened.

In an embodiment, the elastic member may include a rubber.

FIG. 15 is a block diagram illustrating an electronic device 1501 in a network environment 1500 according to various embodiments. Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, an HDMI connector, a USB connector, an SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or U-plane latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semipermanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing forming an exterior of the electronic device;
a first member within the housing;
a fingerprint sensor within the housing, including a first surface supported by the first member and a second surface opposite the first surface;
a second member detachably fastened to the first member and including a third surface formed as a part of the housing and a fourth surface opposite to the third surface and facing the second surface; and
an elastic member disposed between the second member and the fingerprint sensor to provide an elastic force to the second member, the elastic member being directly contacted on the fourth surface, and
wherein the fingerprint sensor is configured to receive ultrasonic waves reflected by an external object contacted on the third surface through the elastic member and the second member.

2. The electronic device of claim 1, wherein:
the elastic member includes an upper surface directly contacting the fourth surface of the second member and a lower surface opposite to the upper surface and facing the fingerprint sensor;
the upper surface includes a central region and a peripheral region extending from the central region to a periphery of the upper surface to surround the central region;
the elastic member is compressed as the second member is fastened to the first member;
before the first member and the second member are fastened, a first distance between the central region of the upper surface and the lower surface is greater than a second distance between the peripheral region of the upper surface and the lower surface;
the first distance and the second distance are based on a direction perpendicular to the lower surface; and
the second distance gradually increases as the peripheral region approaches the central region.

3. The electronic device of claim 2, wherein:
the periphery of the upper surface includes a first part, a second part, a third part connecting an end of the first part and an end of the second part, and a fourth part connecting another end of the first part and another end of the second part;
the first part includes a first section, a second section spaced apart from the first section, and a third section connecting the first section and the second section;
the second part includes a fourth section facing the first section, a fifth section spaced apart from the fourth section and facing the second section, and a sixth section facing the third section and connecting the fourth section and the fifth section;
the peripheral region includes:
a first region extending from the first section of the first part to the fourth section of the second part; and
a second region extending from the second section of the first part to the fifth section of the second part; and
the central region extends from the third section of the first part to the sixth section of the second part.

4. The electronic device of claim 3, wherein:
the central region includes a line segment extending from the third section of the first part to the sixth section of the second part and spaced apart from the peripheral region; and
before the first member and the second member are fastened, the first distance gradually increases as the peripheral region approaches the line segment.

5. The electronic device of claim 3 or claim 4, wherein a shape of the periphery of the upper surface is:
a rectangle in which the first part is longer than the third part; or
a rectangle in which the third part is longer than the first part.

6. The electronic device of claim 2, wherein the peripheral region entirely encloses the central region.

7. The electronic device of claim 6, wherein:
the central region includes a point spaced apart from the peripheral region;
before the first member and the second member are fastened, the second distance gradually increases as the peripheral region approaches the point.

8. The electronic device of any one of claims 2 to 7, wherein at least one of a first cross section and a second cross section of the upper surface includes a curved line, the first cross section cut into a plane perpendicular to the lower surface, the second cross section cut into another plane perpendicular to the surface and the lower surface.

9. The electronic device of any one of the preceding claims, comprising an adhesive member disposed between the second surface of the fingerprint sensor and the elastic member.

10. The electronic device of any one of the preceding claims, comprising an adhesive member disposed between the first member and the first surface of the fingerprint sensor.

11. The electronic device of any one of the preceding claims, wherein:
the housing includes a first cover, a second cover, and a frame disposed between the first cover and the second cover to partially form the exterior of the electronic device;
the second member is the frame;
the frame includes a portion in direct contact with the elastic member; and
the fingerprint sensor is configured to receive ultrasonic waves through the elastic member and the portion of the frame.

12. The electronic device of claim 11, wherein a protrusion or a recess is formed on the third surface of the portion of the frame.

13. The electronic device of claim 11, wherein:
the frame includes a peripheral portion at least partially surrounding the portion; and
the portion and the peripheral portion of the frame are connected without a step.

14. The electronic device of any one of claims 1 to 10, comprising:
a display assembly including a first cover forming the third surface, a display panel disposed under the first cover, and a metal layer supporting the display panel and forming the fourth surface, and
wherein the second member is the display assembly.

15. The electronic device of any one of the preceding claims, wherein:
the fingerprint sensor includes a side surface extending from a periphery of the first surface to a periphery of the second surface;
the first member includes a support surface and a protrusion, the support surface supporting the fingerprint sensor;
the protrusion of the first member extends from the support surface along the side surface toward the periphery of the second surface; and
when viewed in a direction perpendicular to the support surface, the protruding portion of the first member at least partially surrounds the side surface of the fingerprint sensor.
